Europäisches Patentamt

European Patent Office

Office européen des brevets

(11) Veröffentlichungsnummer : **0 040 188**
**B1**

(12) **EUROPÄISCHE PATENTSCHRIFT**

(45) Veröffentlichungstag der Patentschrift :
04.07.84

(51) Int. Cl.³ : **G 03 B 31/02**

(21) Anmeldenummer : **81890025.0**

(22) Anmeldetag : **12.02.81**

(54) Verfahren und Einrichtung zur Wiedergabe von Lichttonfilmen in mehreren Sprachen.

(30) Priorität : **19.02.80 AT 901/80**

(43) Veröffentlichungstag der Anmeldung :
**18.11.81 Patentblatt 81/46**

(45) Bekanntmachung des Hinweises auf die Patenterteilung : **04.07.84 Patentblatt 84/27**

(84) Benannte Vertragsstaaten :
**BE CH DE FR GB IT LI LU NL SE**

(56) Entgegenhaltungen :
**AT-B- 166 896**
**CH-A- 308 936**
**DE-B- 1 001 893**
**DE-C- 583 151**
**FR-A- 1 290 622**
**GB-A- 1 048 212**
**US-A- 2 901 939**
**US-A- 3 003 390**

(73) Patentinhaber : **Benesch, Fred**
**Fuchsrain 29**
**A-6021 Innsbruck (AT)**

(72) Erfinder : **Benesch, Fred**
**Fuchsrain 29**
**A-6021 Innsbruck (AT)**

Jouve, 18, rue St-Denis, 75001 Paris, France

## Beschreibung

Die Erfindung betrifft ein Verfahren und eine Einrichtung zur Wiedergabe von Lichttonfilmkopien in mehreren Sprachen, bei denen auf dem Film eine Lichttonspur für die Originalsprache zusammen mit der Geräusch- und Musikuntermalung sowie weitere Magnettonspuren für andere Sprachen angeordnet sind.

Eine solche Einrichtung ist beispielsweise aus der CH-A 308 936 bekannt.

Nach der FR-A-1 290 622 werden auf einem Filmstreifen neben der Lichttonspur für die Originalsprache zwei weitere Magnetspuren angeordnet, die den Sprachtext in zwei anderen Sprachen enthalten. Die Wiedergabe erfolgt dabei in der Originalsprache über Lautsprecher und für die anderen Sprachen über Kopfhörer, die über Zuleitungen an den Zuschauerplätzen vorgesehen sind. Geräusche und Musik werden ebenfalls auf jedem Kanal getrennt aufgenommen und wiedergegeben. Abgesehen von der etwas anderen Aufgabe dieser Anordnung, nämlich die gleichzeitige Darbietung in verschiedenen Sprachen zu ermöglichen, stellt die notwendige Verkabelung des Zuschauerraumes einen großen Nachteil dar. Außerdem muß der Geräusch- bzw. Musikteil jedem Sprachkanal zugemischt werden, was einen erheblichen Synchronisationsaufwand darstellt.

Aus der US-A-3 003 390 ist es bekannt, eine Übersetzung des Textes durch einen einzigen Übersetzer vornehmen zu lassen und diesen Text zusätzlich zum Originaldialog abzuspielen. Dieser zusätzliche Text ist auf einer Magnetspur aufgenommen und wird dem Publikum über einen im Rücken des Zuschauerraumes angeordneten Lautsprecher in den Sprechpausen des Originaltons dargeboten. Ein ähnliches Verfahren ist auch aus der AT-B-166 896 bekannt. Es leuchtet ein, daß diese Verfahren sowohl für das die Originalsprache beherrschende Publikum als auch das fremdsprachige Publikum unbefriedigend sind. Außerdem handelt es sich nicht um eine echte Synchronisation, da der fremdsprachige Text in den Sprechpausen des Originaltextes wiedergegeben wird.

Für eine nachträgliche Übersetzung der Sprache auf vorhandene Lichttonkopien ist auch das Untertitelungsverfahren bekannt. Bei diesem Verfahren werden auf einzelne Fimbilder von Szenenkomplexen der Kopie ausgewählte Kurztexte aus der Filmhandlung durch verschiedene Methoden aufgebracht oder aufgeprägt. Durch die Projektion auf die Kinoleinwand werden diese Schriftzeichen mehr oder weniger gut sichtbar.

Der Zuschauer muß daher das projezierte Bild betrachten und gleichzeitig die Schrift lesen. Die durch solche Schriftzeichen versehenen Filmkopien sind somit für andere Spracheinsätze nicht mehr zu verwenden. Außerdem kann nur eine Übersetzung dieser Art auf eine Filmkopie aufgebracht werden.

Die Erfindung hat sich deshalb zur Aufgabe gestellt, ein Verfahren und eine Einrichtung zu schaffen, das bzw. die eine Wiedergabe eines Films in einer anderen als der Originalsprache ermöglicht, ohne daß dafür eine komplizierte Mischtechnik für den Musik- bzw. Geräuschhintergrund erforderlich ist.

Diese Aufgabe wird durch das im Anspruch 1 gekennzeichnete Verfahren gelöst.

Auf dem Film sind demnach außer der Lichtspur eine oder mehrere Magnettonspuren aufgetragen und je nach Auswahl der Wiedergabespur wird von einem Magnettonadapter mittels automatischer Verstärkerregelung die Lautstärke der Lichttonspur während der Sprachwiedergabe zugunsten einer der Magnettonspuren reduziert, wobei die Umsteuerung auf Magnetton mittels Pilotton erfolgt. Der Verstärker ist auf die jeweilige wiederzugebende Spur geschaltet und der reduzierte Wiedergabepegel des Lichttonstreifens bleibt als Hintergrund erhalten.

Durch die erfindungsgemäße Einrichtung können die teuren Filmkopien in beliebig vielen Sprachversionen Verwendung finden, da die aufgenommenen Magnetonspuren immer wieder gelöscht werden können. Außerdem gestattet die neue Einrichtung die volle lückenlose Übersetzung der gesamten Lichtton-Filmsprache und somit auch deren Wiedergabe in der gewünschten Landessprache.

Ein weiterer Vorteil liegt ferner darin, daß eine Filmkopie mehrere verschiedene Landessprachen zugleich aufnehmen kann, diese durch einen Wahlschalter wahlweise zum Lichtton geschaltet werden können. Dadurch ist die optimale Ausnützung der teuren Filmkopie möglich.

Ein Ausführungsbeispiel der Erfindung ist in der Zeichnung dargestellt.

Figur 1 zeigt eine schematische Darstellung des Projektionsapparates mit dem dazugeschalteten Magnettonadapter 2 ;

Figur 2 zeigt die mit Magnettonspuren versehene Lichtton-Filmkopie.

Mit 1 ist schematisch der Projektor bezeichnet.

Die Lichttonkopie 9, welche in eine andere Sprache als in jene der Fassung des Lichttones übersetzt werden soll, wird auf der Glanzseite des Filmes an einer bestimmten Stelle mit einer oder mehreren Magnettonspuren (9b) belegt.

Die Auswahl einer der Magnettonspuren 9b erfolgt mit Hilfe des Wahlschalters 8.

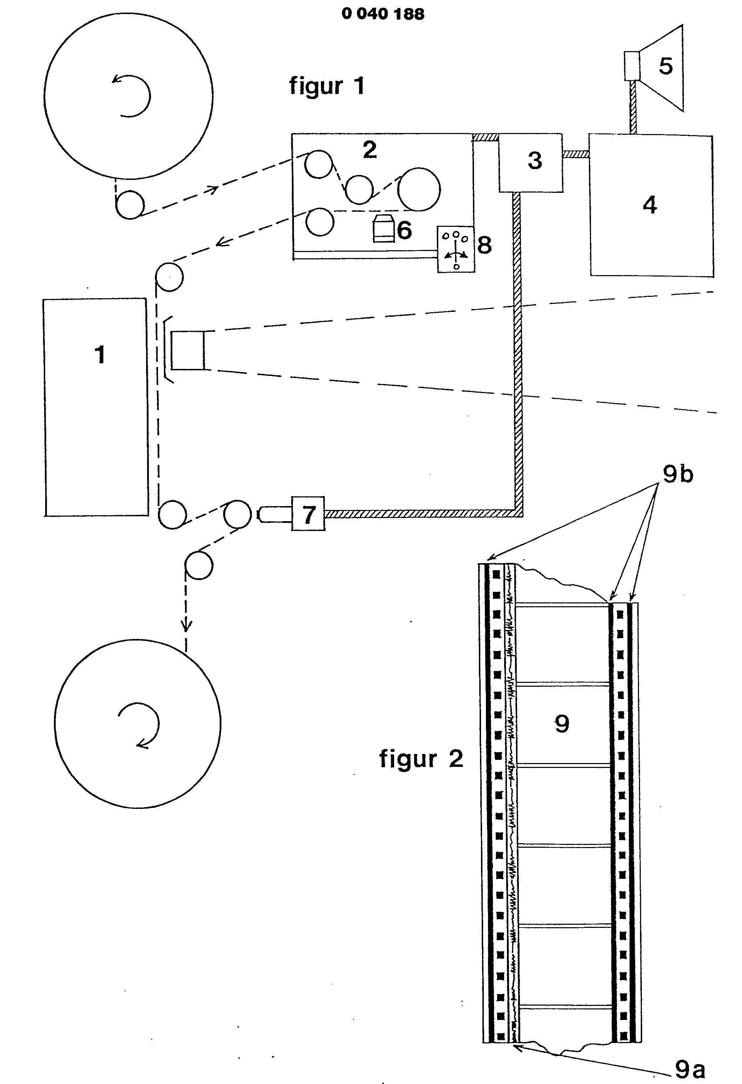

Ein Zusatzgerät, ein dazu entwickelter kleiner Magnettonadapter 2, wird an den Filmprojektor (Fig. 1) in die Filmlaufbahn montiert.

Auf die Magnettonspur wird mittels eines einfachen Überspielvorganges die komplette Übersetzung der Lichttonsprache analog der Filmhandlung überspielt, wobei die Lichttonspur 9a der Filmkopie 9 unberührt erhalten bleibt.

Die Filmkopie 9 hat somit eine Lichttonspur 9a und eine oder mehrere Magnettonspuren, 9b.

Nachdem der Filmprojektor (Fig. 1) bei der Abspielung der Filmkopie sowohl den Lichtton durch die Photozelle 7 als auch die Magnettonspur durch den Magnettonkopf 6 zugleich abtastet und die Töne durch den Kinoverstärker 4 und über den Lautsprecher 5 ebenfalls zugleich wiedergegeben würden, muß durch eine elektr. Vorrangschaltung 3, die vor dem Verstärkereingang liegt, die wahlweise Verstärkung von Lichtton und Magnetton reguliert werden.

Durch ein Signal auf der Magnettonspur schaltet sich der Lautstärkepegel bzw. die Verstärkung des Lichttones durch die Funktion der Vorrangschaltung elektronisch auf ein regulierbares Niveau zurück, sodaß nur mehr die Sprache vom Magnetton klar und deutlich zu hören ist. Nach Beendigung des Signals auf dem Magnetton wird der Lautstärkepegel des Lichttones wieder automatisch voll ausgesteuert.

**Ansprüche**

1. Verfahren zur Wiedergabe von Lichttonfilmkopien, bei denen auf dem Film eine Lichttonspur (9a) für die Originalsprache zusammen mit der Geräusch- und Musikuntermalung sowie weitere Magnettonspuren (9b) für andere Sprachen angeordnet sind, dadurch gekennzeichnet, daß auf die Magnettonspur bzw. die Magnettonspuren (9b) nur die andere Sprache bzw. die anderen Sprachen synchron aufgenommen werden und daß ein Signal auf der betreffenden Magnettonspur (9b) aufgebracht wird, durch das die Lautstärke der Lichttonspur (9a) während der Sprach-wiedergabe zugunsten einer der Magnettonspu-ren (9b) reduziert wird, wobei der reduzierte Wiedergabepegel der Lichttonspur (9a) als Hintergrund jedoch erhalten bleibt.

2. Einrichtung zur Durchführung des Verfahrens nach Anspruch 1, dadurch gekennzeichnet, daß ein Wahlschalter (8) zur Auswahl der wiederzugegebenden Sprache vorgesehen ist.

3. Einrichtung zur Durchführung des Verfahrens nach Anspruch 1, dadurch gekennzeichnet, daß eine Mischschaltung (3) zur Unter-drückung des Wiedergabepegels der Lichtton-spur (9a) vorgesehen ist.

**Claims**

1. Process for projecting film copies using the original sound track complete with dialogue, background noises and music as well as additional magnetic tracks (9b) for translation in other languages ; the process is characterized essentially by the fact that the additional tracks are used exclusively for recording the translated version or versions for simultaneous play-back and that a pilot tone on the track to be played back (9b) reduces the volume of the original sound track (9a) during the translation to make sure the recorded translation may be clearly heard, while the original sound track (9a) remains intelligible at reduced volume level.

2. Equipment for applying the above process (claim 1) which is characterized by the fact that a dial (8) is used for selecting the translation to be played back.

3. Equipment for applying the above process (claim 1) which is characterized by a sound adapter (3) for reducing the volume of the original sound track (8).

**Revendications**

1. Procédé pour la reproduction de copies de films de son optique où sont appliquées sur la bande une piste de son optique (9a) pour la langue originale avec le fond sonore et musique et d'autres pistes de son magnétique (9b) pour d'autres langues étrangères, caractérisé par le fait que, sur la piste de son magnétique respectivement sur les pistes de son magnétique (9b), seulement l'autre langue respectivement les autres langues sont enregistrées synchroniquement et qu'un signal est appliqué sur la piste de son magnétique (9b) en question par lequel le volume de la piste de son optique (9a) est réduit, pendant la reproduction de langue, au profit d'une des pistes de son magnétique (9b), mais où le niveau réduit de reproduction de la piste de son optique (9a) reste en tant que fond.

2. Dispositif pour la réalisation du procédé selon formule 1, caractérisé par le fait qu'un commutateur (8) pour le choix de la langue à reproduire est prévu.

3. Dispositif pour la réalisation du procédé selon formule 1, caractérisé par le fait qu'un couplage à combinaison (3) pour la suppression du niveau de reproduction de la piste de son optique (9a) est prévu.

0 040 188

figur 1

figur 2